# EUROPEAN PATENT SPECIFICATION

(11) **EP 1 958 896 B1**
(45) Date of publication and mention of the grant of the patent: **03.08.2011**
(21) Application number: 07109839.6
(22) Date of filing: 08.06.2007
(51) Int. Cl.: B65G 21/04

(54) **An overhead cable conveyor system with a semicircular, deep, hollow conveyor belt**
Overheadkabel-Fördersystem mit halb umlaufendem, tiefem, hohlem Förderband
Système de convoyeur de câble aérien avec courroie de transporteur creuse, profonde et semi-circulaire

(30) Priority: 16.02.2007 IT TO20070114
(43) Date of publication of application: 20.08.2008
(73) Proprietor: Agudio S.p.A., Aosta (AO) (IT)
(72) Inventor: Andreetto, Alessandro, 39042 Bressanone (Bolzano) (IT)
(74) Representative: Boggio, Luigi

(56) References cited:
- EP-A- 0 745 545
- US-A- 3 106 284

## Description

The present invention relates in general to overhead cable conveyor systems and, in particular, to a system having the characteristics defined in the preamble to Claim 1.

A system of this type is known from EP 0 745 545. That system comprises a conveyor belt having a plurality of transverse elements distributed along its length and fixed to the belt. At their ends, the transverse elements have rollers which bear on carrying cables arranged on opposite sides of the belt. There is a pair of cables for the conveyor pass of the belt and a pair of cables for the return pass. The cables thus act both as supports for the belt and as rolling tracks for the rollers so as to enable the belt to move between the two ends of the conveyor system.

This structure is complex and may lead to control and maintenance problems since, for large systems, a large number of rollers must be provided along the length of the belt, and the rollers have to move correctly together with the belt when the system is in operation.

The object of the present invention is to provide an overhead cable conveyor system with a conveyor belt which does not have the above-described problem.

This object is achieved, according to the invention, by an overhead cable conveyor system having the characteristics defined in Claim 1.

In this system, the only portion which performs a translational movement is the belt which runs on series of rollers that are arranged along the path of the belt and are suspended in a stationary manner. Frame elements suitable for supporting the series of rollers are arranged along the carrying cables and confer a degree of stiffness on the structure; the series of rollers are also provided with centering means controlled by cables extending between the ends of the system. This also prevents instability problems which may arise with a conveyor belt system that is movable on rollers suspended on carrying cables; such problems are greater the longer are the spans of the system.

Preferred embodiments of the invention are defined in the dependent claims.

A preferred but non-limiting embodiment of the invention will now be described with reference to the appended drawings, in which:
- Figure 1 is a diagram which shows an overhead cable conveyor system according to the invention;
- Figure 2 is an enlarged view of a loading station of the system of Figure 1, indicated by the arrow II in that drawing;
- Figure 3 is an enlarged view of a discharge station of the system of Figure 1, indicated by the arrow III in that drawing;
- Figure 4 is a side view of a section of the system of Figure 1;
- Figure 5 is a front view of an element of the system of Figure 1;
- Figure 6 is a side view of the element of Figure 5;
- Figure 7 is a front view of another element of the system of Figure 1;
- Figure 8 is a side view of an installation of the system, indicated by the arrow VIII of Figure 1;
- Figure 9 is a section through the installation of Figure 8;
- Figure 10 is a side view of another installation of the system, indicated by the arrow X in Figure 1;
- Figure 11 is a section through the installation of Figure 10; and
- Figure 12 is an enlarged view of a detail of Figure 11.

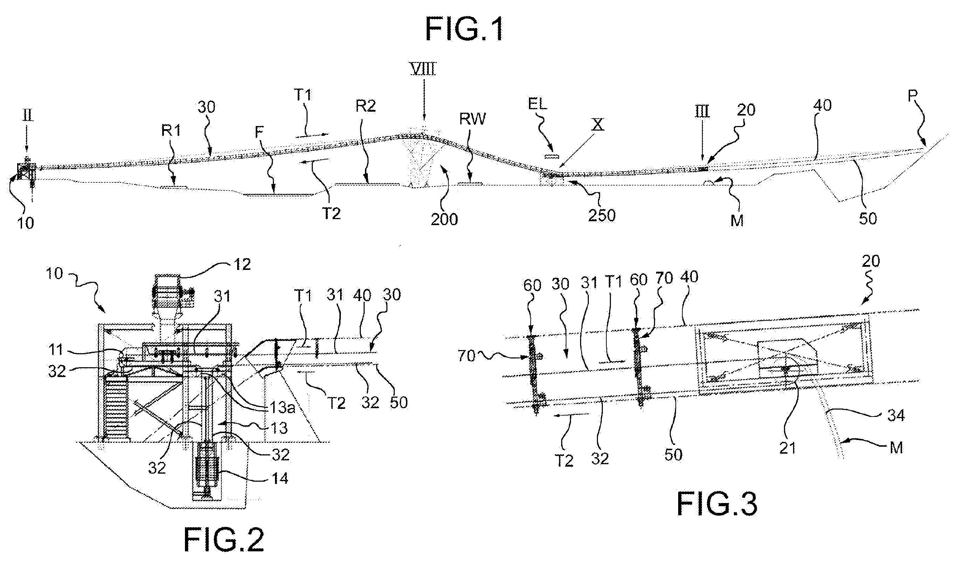

With reference to the drawings, these show an overhead cable conveyor system according to the invention. In the embodiment shown in Figure 1, the system is configured to connect a loading station 10 with a discharge station 20 between which natural obstacles such as a water course F and artificial obstacles such as roads R1 and R2, an electricity line EL, and a railway RW are interposed. The system enables loose objects and bulk materials to be transported continuously from the loading station 10 to the discharge station 20, passing these obstacles. The overhead cable conveyor system comprises a conveyor belt 30 extending in a closed loop between the two loading and discharge ends 10, 20 so as to define an upper, conveyor pass 31 and a lower, return pass 32.

In the loading station 10, which is shown in greater detail in Figure 2, there are a deflection system 11 of known type for deflecting the belt 30 and a feed system 12 for feeding the material M to be transported onto the conveyor pass 31 of the belt 30. In the loading station 10, there is also a counterweight tensioning system 13 of known type for ensuring a constant tension of the belt 30 with variations in the loading conditions. The system 13 comprises a plurality of rollers 13a and a counterweight 14 which act on the return pass 32 of the conveyor belt.

In the discharge station 20, which is shown in greater detail in Figure 3, there are a deflection system 21 of known type for deflecting the belt 30 and a discharge system 34 comprising, for example, a chute or a hopper for enabling the material M to be discharged from the conveyor belt. In the drawings, the arrows T1 indicate the direction of movement of the conveyor pass 31 of the belt, and the arrows T2 indicate the direction of movement of the return pass 32.

The system further comprises a pair of upper carrying cables 40 and a pair of lower carrying cables 50 which extend at least between the loading and discharge stations and are stationary. In the embodiment shown, the upper and lower carrying cables 40, 50 are anchored inside the structure of the loading station 10 at one end and extend beyond the discharge station 20 to an anchorage point P to which they are anchored. The discharge station 20 is thus suspended on the carrying cables 40 and 50 in a stationary manner, for example, by clamps. The entire region underlying the discharge station 20 can thus be utilized for the accumulation of the material M discharged. In an embodiment not shown, the discharge station 20 may be mounted so as to be movable on the carrying cables 40, 50 by means of wheels and may be provided with a locating cable for moving it along the carrying cables.

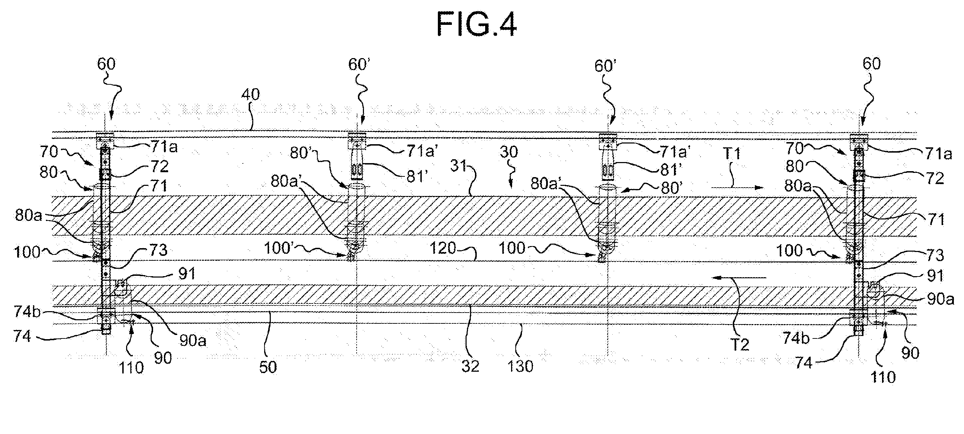

Anchoring points 60, 60', at which the conveyor belt 30 is suspended on the cables 40, 50, are distributed at regular intervals along the cables 40, 50. Figure 4 shows a short section of the path of the belt 30 in which four anchoring points 60, 60' can be seen. At some anchoring points 60 both the conveyor pass 31 and the return pass 32 of the belt are suspended on the cables 40, 50. At other anchoring points 60' only the conveyor pass 31 of the belt is suspended on the upper cables 40.

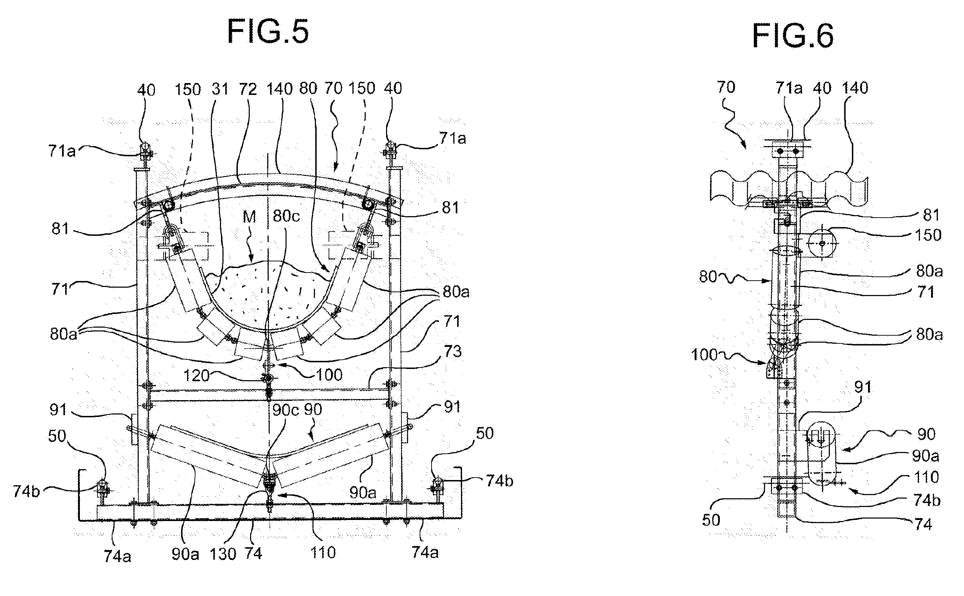

One of the anchoring points 60 at which both the conveyor pass 31 and the return pass 32 of the belt are suspended on the cables 40, 50 will now be described with reference to Figures 5 and 6 in particular. At the point 60 there is a rigid frame element 70 which rigidly interconnects the upper cables 40 and the lower cables 50. The rigid frame element 70 comprises a pair of lateral uprights 71 and upper, intermediate and lower cross-members 72, 73, 74 which interconnect the uprights 71. The upper and lower cross-members 72, 74 are arranged at the ends of the uprights 71 and the lower cross-member 74 is longer than the upper cross-member 72 and thus has ends 74a which project laterally relative to the uprights 71. Clamps 71a of known type are disposed on the upper ends of the uprights 71 to anchor the frame element 70 to the upper cables 40. Further clamps 74b of similar type to the above-mentioned clamps 71a are disposed on the laterally projecting ends 74a of the lower cross-member 74 to anchor the frame element 70 to the lower cables 50. The distance between the fixing points on the two upper carrying cables 40 is thus advantageously shorter than the distance between the fixing points on the two lower carrying cables 50.

An upper series 80 of axially interconnected rollers 80a is suspended on the lateral uprights 71. The series 80 of rollers is suspended on the lateral uprights 71 by means of brackets 81 on which lateral ends of the series 80 of rollers are engaged. The series 80 of rollers is thus suspended so that it can oscillate in a vertical plane parallel to the direction of movement of the belt 30. The conveyor pass 31 of the conveyor belt bears on the upper series 80 of rollers. The series 80 of rollers is of the garland type since this configuration allows the conveyor belt to bend in a transverse plane so as to adopt a particularly deep, hollow configuration which is thus suitable for accommodating a large quantity of material M in a stable manner. A lower series 90 of axially interconnected rollers 90a is suspended on the lateral uprights 71 below the intermediate cross-member 73. The series 90 of rollers is suspended on the lateral uprights 71 by means of brackets 91 on which lateral ends of the lower series 90 of rollers are engaged. The lower series 90 of rollers is thus suspended so that it can oscillate in a vertical plane parallel to the direction of movement of the belt 30. The lower series 90 of rollers is preferably of the type comprising a pair of rollers in a V-shaped arrangement.

The upper series 80 of rollers and the lower series 90 of rollers have respective centering devices 100, 110. These centering devices are of the type which is the subject of patent EP 0 504 036 and provide substantially for two central rollers of a series of rollers to be connected to one another rigidly and for the central rigid connection point between these two rollers, which is at a lower level than the lateral fixing points of the series of rollers, to be articulated on an articulation pin by means of a lever. Figure 5 of patent EP 0 504 036, to which reference should be made for further details, shows an embodiment which has a control cable connected to all of the articulation pins of the series of rollers arranged along the conveyor belt. In accordance with the teaching of patent EP 0 504 036, the system according to the invention therefore has an upper control cable 120 and a lower control cable 130 which extend between the loading and discharge stations 10, 20 of the conveyor system and to which the respective central points 80c and 90c of the upper series of rollers 80 and of the lower series 90 of rollers arranged along the path of the belt 30 are articulated. In at least one of the loading and discharge stations 10, 20, means (not shown) are provided for controlling the upper and lower control cables in a manner such as to regulate the positions of the points at which they are articulated to the respective central points 80c and 90c of the upper series 80 of rollers and of the lower series 90 of rollers arranged along the path of the belt 30. The use of the above-described centering means is essential for the purposes of the invention since the series of rollers are suspended on cables and hence on a flexible structure which might lead to problems of instability of the belt, and the above-described centering means enable the belt to be held firmly on the series of rollers which guide it.

The frame element 70 may comprise further accessories such as, for example, an upper covering element 140, which may be designed so as to extend between consecutive frame elements 70, bearing thereon, so as to protect the material M transported on the belt 30, and lateral rollers 150 disposed at the sides of the upper series 80 of rollers to correct any derailments of the belt 30 from the series 80.

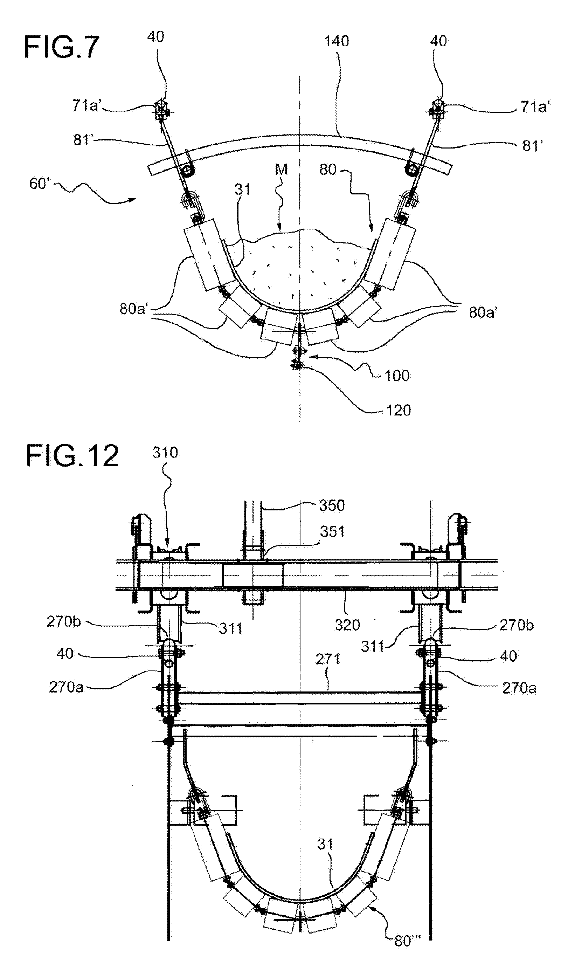

One of the anchoring points 60' at which only the conveyor pass 31 of the belt is suspended on the upper cables 40 will now be described with reference to Figure 7 in particular. At the points 60', there is a series 80' of axially interconnected rollers 80a'. The lateral ends of the series 80' of rollers are engaged on brackets 81'. Clamps 71a' of a type similar to those mentioned above are disposed on the brackets 81', by means of which the series 80' of rollers is anchored to the upper cables 40. The series 80' of rollers is thus suspended so that it can oscillate in a vertical plane parallel to the direction of movement of the belt 30. The conveyor pass 31 of the conveyor belt bears on this series 80' of rollers. The series 80' of rollers is of the garland type since this configuration allows the conveyor belt to bend so as to adopt a particularly deep, hollow configuration which is thus suitable for accommodating a large quantity of material M in a stable manner.

The series 80' of rollers has a centering device 100' which is also of the type that is the subject of patent EP 0 504 036. In accordance with the teaching of patent EP 0 504 036, the series 80' of rollers therefore has a central point 80c' which is also articulated to the upper control cable 120.

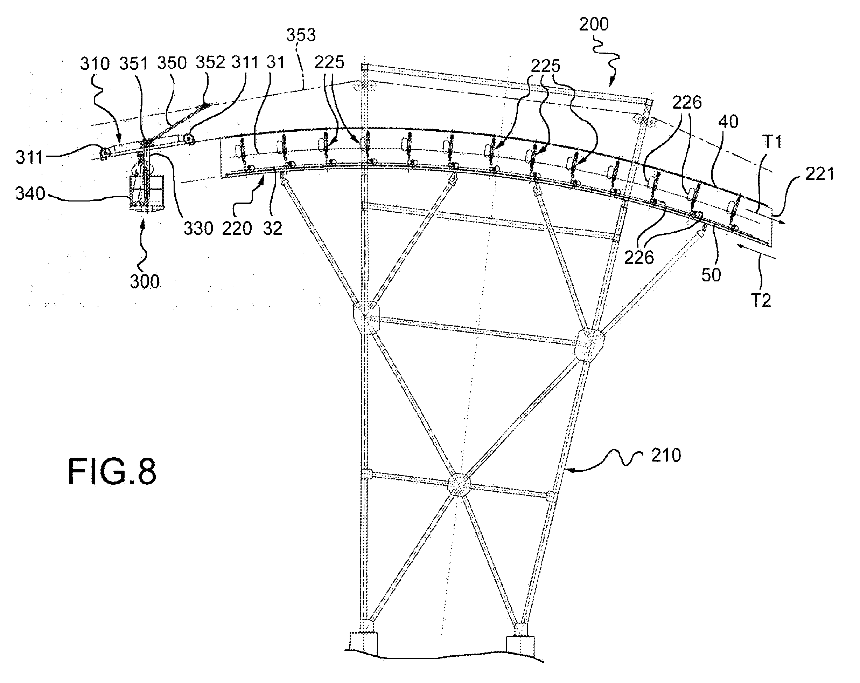

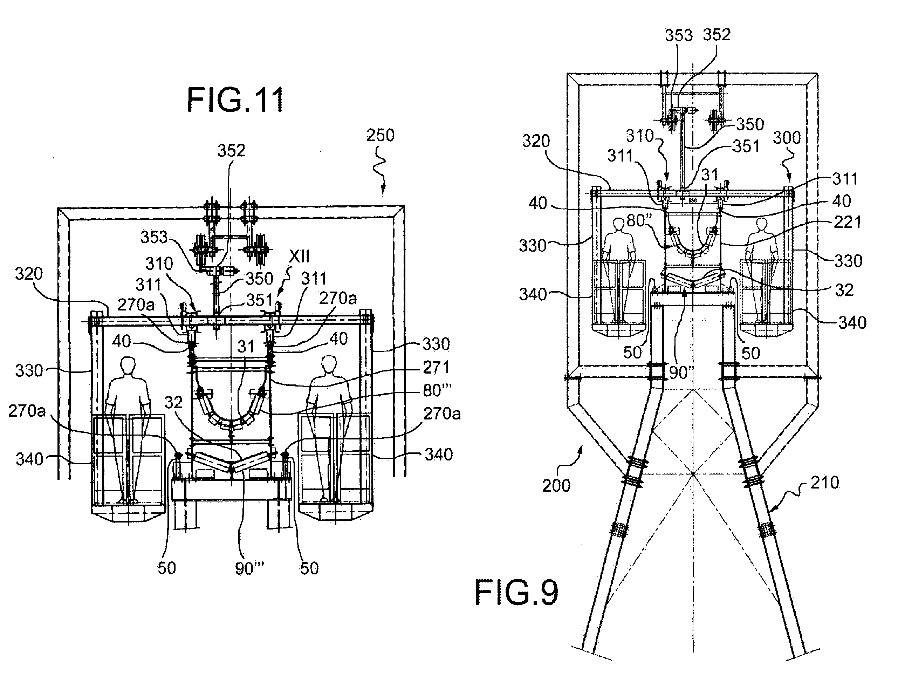

In the embodiment shown in Figure 1, a support shoe installation 200, shown in greater detail in Figures 8 and 9, is arranged in an intermediate position between the loading and discharge stations.

The installation 200 comprises a gantry 210 and an upper support shoe 220 supported thereby. The support shoe 220 defines a support for the carrying cables 40 and 50 and its radius of curvature is selected so as to permit a slight curvature of the conveyor belt 30. In particular, the radius of curvature of the shoe is very large in comparison with that which is normally required in a cableway system for the curvature of the carrying cables. A minimum radius of curvature of 250 times the diameter of the cable is normally adopted in the cableways field. In the system proposed, the radii of curvature are of the order of 1500 times the diameter of the cable since they have to adapt the curvature of the cables to that permitted by the belt.

The support shoe 220 has a tunnel structure 221 which extends along the shoe and inside which the upper pass 31 and the lower pass 32 of the belt 30 are intended to travel. For this purpose, upper series 80" of rollers and lower series 90" of rollers are arranged in predetermined positions 225 inside the tunnel structure 221 to support the upper pass 31 and the lower pass 32 of the belt 30, respectively. These series 80" and 90" of rollers are suspended on the walls of the tunnel structure 221 and are configured in the same way as the upper and lower series 80 and 90 of rollers arranged on the frame elements 70. In particular, they also have respective centering devices. The basic difference between the series 80, 90 of rollers suspended on the frame elements 70 and the series 80", 90" of rollers suspended on the side walls of the tunnel structure 221 is that, for the former, the primary support function is performed by the carrying cables whereas, for the latter, the support shoe 220 provides support both for the carrying cables 40, 50 and for the series 80" and 90" of rollers. Windows 226 are formed in the side walls of the tunnel structure 221 to afford access to the interior of the tunnel structure 221 for maintenance purposes.

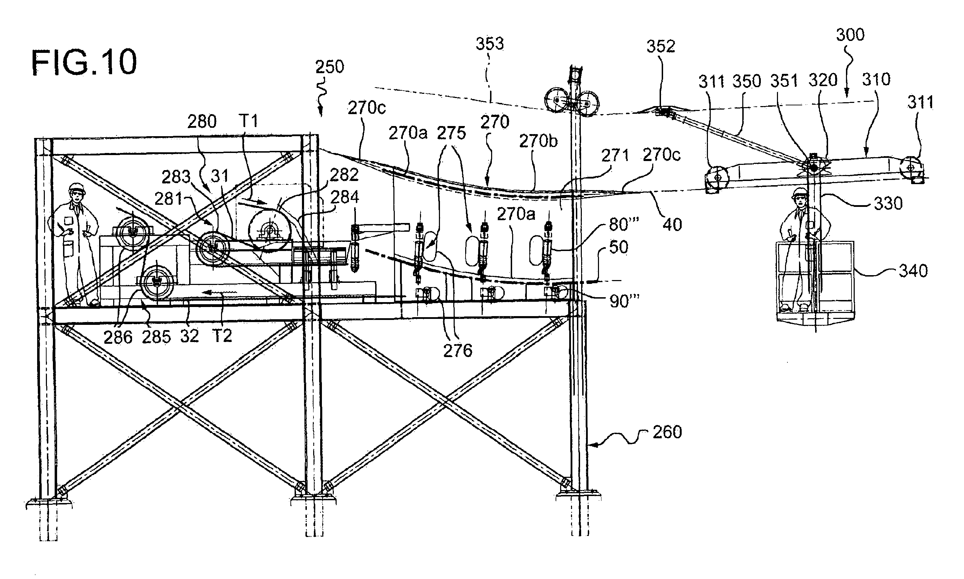

In the embodiment shown in Figure 1, a retaining shoe installation 250, shown in greater detail in Figures 10 and 11, is also arranged in an intermediate position between the loading and discharge stations.

This installation 250 comprises a gantry 260 and an upper shoe 270 supported thereby. The shoe 270 defines a retaining, deflection guide for the carrying cables 40 and 50 since, as shown in Figures 1 and 10, these carrying cables 40 and 50 are obliged to follow a downwardly inclined path between the supporting shoe 220 and the retaining shoe 270, and then a slightly upwardly inclined path between the retaining shoe 270 and the discharge station 20. The curve defined by the carrying cables 40 and 50, which has an upward-facing concavity, is visible in Figure 10. To achieve this curvature, guides 270a having an inverted U-shaped cross-section (see Figure 12) are arranged on the shoe 270 and define grooves in which the cables 40 and 50 are housed.

The shoe 270 has a tunnel structure 271 which extends along the shoe 270 and inside which the upper pass 31 and the lower pass 32 of the belt 30 are intended to travel. For this purpose, upper series 80'" and lower series 90'" of rollers are arranged in predetermined positions 275 inside the tunnel structure 271 to support the upper pass 31 and the lower pass 32 of the belt 30, respectively. These series 80'" and 90'" of rollers are suspended on the walls of the tunnel structure 271 and are configured in the same way as the upper and lower series 80" and 90" of rollers arranged inside the tunnel structure 221 of the support shoe 220. Windows 276 are formed in the side walls of the tunnel structure 271 to afford access to the interior of the tunnel structure 271 for maintenance purposes.

Since, in the installation 250, the belt 30 naturally cannot follow the required curve simply by bearing on carrying rollers, a deflection system 280 is provided inside the installation 250 to deflect the belt 30 from a first predetermined inclination upstream of the system 280 to a second, different predetermined inclination downstream of the system 280.

The deflection system 280 comprises a subsystem 281 for deflecting the upper pass 31 of the belt 30; the subsystem receives the portion of the upper pass 31 of the belt 30 which comes from the support shoe 220 and urges it towards the tunnel structure 271 of the retaining shoe 270. For this purpose, the subsystem 281 comprises a drive roller 282 and a deflecting roller 283 between which the pass 31 of the belt 30 is forced to follow an S-shaped path. Means, for example, a chute 284, are therefore provided for discharging the material M from the upper pass 31 of the belt 30 upstream of the S-shaped path and reloading the material onto the upper pass 31 of the belt 30 downstream of the S-shaped path. The material M which is on the portion of the upper pass 31 of the belt 30 which arrives at the drive roller 282 thus falls into the chute 284 beyond the roller 282. The portion of the upper pass 31 of the belt 30 is then deflected about the deflecting roller 281 and forced to pass beneath the chute 284 so that it is reloaded with the material M. The upper pass 31 of the belt 30 is then guided on the upper series 80"' of rollers inside the tunnel structure 271. The system 280 for deflecting the belt 30 also comprises a subsystem 285 for deflecting the lower pass 32 of the belt 30; the subsystem receives the portion of the lower pass 32 of the belt 30 which comes from the retaining shoe 270 and deflects it towards the support shoe 220. For this purpose, the subsystem 285 comprises a pair of deflecting rollers 286 between which the pass 32 of the belt 30 is forced to follow an S-shaped path.

Figures 8 to 11 show a maintenance car 300 that can advantageously be used in the system according to the invention. The car 300 has a carriage 310 comprising two series of wheels 311 which bear on the two upper carrying cables 40, respectively. A transverse element 320 is mounted on the carriage 310 and respective suspension arms 330 are arranged at its ends; the suspension arms support respective cages 340 for transporting maintenance personnel. The structure of the car 300 is thus fork -shaped and arranged astride the belt 30, thus affording easy access to both sides of the belt 30. A drive arm 350 is mounted orientably on the transverse element 320 of the car 300 by means of a ball joint 351. At its free end, the drive arm 350 has a clamp 352 that is anchored to a hauling cable 353 which extends between the loading and discharge stations 10, 20 and is provided to permit a cableway type movement of the maintenance car 300. The clamp 352 is mounted on the arm 351 so as to be orientable relative thereto. The arm can thus be oriented by means of the two articulated joints disposed at the ends of the arm 350, adapting itself to the various attitudes which the hauling cable 353 adopts relative to the car 300 along the path of the system, as can be seen in Figures 8 and 10.

For the greater part of the path between the loading and discharge stations 10 and 20, the wheels 311 of the carriage 310 of the car 300 move on the carrying cables 40. In the region of the retaining shoe 270, however, the wheels 311 cannot bear on the cables 40 since the cables 40 are housed in the guides 270a, as shown in Figure 12. The upper walls 270b of the guides 270a are therefore arranged to act as rails for the wheels 311 of the carriage 310 of the car 300. To permit a smooth transition at the end points at which the carrying cables 40 emerge from the guides 270a, that is, at the points at which the carrying cables 40 leave the retaining shoe 270, the upper walls 270b of the guides 270a have tapered lead-in portions 270c, visible in Figure 10, at these points.

Naturally, the principle of the invention remaining the same, the details of construction and forms of embodiment may be varied widely with respect to those described and illustrated, without thereby departing from the scope of the invention.

## Claims

1. An overhead cable conveyor system, comprising a conveyor belt (30) extending in a closed loop between two ends (10, 20) of the conveyor system so as to define an upper, conveyor pass (31) and a lower, return pass (32) of the conveyor belt, and a pair of upper carrying cables (40) and a pair of lower carrying cables (50) which extend at least between the ends (10, 20) of the conveyor system and can support the conveyor belt between the ends (10, 20) of the conveyor system, **characterized in that**:
a plurality of rigid frame elements (70) are distributed along the conveyor pass (31) of the belt, each rigid frame element being suspended, on opposite sides, in a stationary manner, on the pair of upper carrying cables and on the pair of lower carrying cables, wherein an upper series (80) of rollers and a lower series (90) of rollers are suspended on the rigid frame element and support the upper, conveyor pass and the lower, return pass of the conveyor belt, respectively, and **in that**,
belt centering means (100, 100', 110, 120, 130) are provided and are of the type comprising an upper control cable (120) and a lower control cable (130) which extend between the ends (10, 20) of the conveyor system and to which the central points (80c, 90c, 80c') of the upper series (80) of rollers and of the lower series (90) of rollers, respectively, are articulated.

2. A system according to Claim 1 wherein each rigid frame element (70) comprises a pair of lateral uprights (71) and at least two cross-members (72, 74) which interconnect the uprights, the upper end of the rigid frame element (70) being anchored on opposite sides to the pair of upper carrying cables and the lower end of the rigid frame element (70) being anchored on opposite sides to the pair of lower carrying cables.

3. A system according to Claim 2 wherein, in each rigid frame element (70), the distance between the anchoring points on the two upper carrying cables (40) is shorter than the distance between the anchoring points on the two lower carrying cables (50).

4. A system according to Claim 2 or Claim 3 wherein clamp means (71a) are disposed at the upper ends of the uprights (71) and can anchor the frame element (70) to the upper carrying cables (40).

5. A system according to any one of Claims 2 to 4 wherein the at least two cross-members comprise an upper cross-member (72) and a lower cross-member (74) which are arranged at the ends of the uprights (71), and wherein the lower cross-member (74) is longer than the upper cross-member (72) so as to have ends (74a) which project laterally relative to the uprights (71) and on which clamp means (74b) are disposed for anchoring the frame element (70) to the lower cables (50).

6. A system according to any one of the preceding claims, wherein the upper series (80) of rollers are of the garland type.

7. A system according to any one of the preceding claims wherein the lower series (90) of rollers are of the type comprising a pair of rollers in a V-shaped arrangement.

8. A system according to any one of the preceding claims, comprising at least one support shoe installation (200) which is arranged along the extent of the upper and lower carrying cables (40, 50) and which can define a support for the carrying cables (40, 50), wherein the support shoe installation has dimensions such as to permit a slight curvature of the conveyor belt (30) in a vertical plane.

9. A system according to Claim 8 wherein the support shoe installation comprises a support shoe (220) having a radius of curvature equal to approximately 1500 times the diameter of the carrying cables.

10. A system according to any one of the preceding claims, further comprising a counterweight tensioning system (13) for ensuring a constant tension of the belt (30) with variations of the loading conditions, the tensioning system comprising a plurality of rollers (13a) and a counterweight (14) which act on the return pass (32) of the conveyor belt.

11. A system according to any one of the preceding claims, further comprising a retaining shoe installation (250) for defining a retaining deflection guide (270a) for the carrying cables.

12. A system according to Claim 11 wherein the shoe installation further comprises a belt deflection system (280) for deflecting the belt from a first predetermined inclination to a second predetermined inclination different from the first.

13. A system according to Claim 12 wherein the belt deflection system comprises a subsystem (281) for deflecting the upper pass (31) of the belt (30) and a subsystem (285) for deflecting the lower pass (32) of the belt (30).

14. A system according to Claim 13 wherein the subsystem (281) for deflecting the upper pass (31) of the belt (30) comprises a plurality of rollers (282, 283) between which the upper pass (31) of the belt (30) is forced to follow an S-shaped path, and means (284) for discharging material (M) from the upper pass (31) of the belt (30) upstream of the S-shaped path and reloading the material onto the upper pass (31) of the belt (30) downstream of the S-shaped path.

15. A system according to Claim 14 wherein the plurality of rollers of the subsystem (281) for deflecting the upper pass (31) of the belt (30) comprises a drive roller (282) and a deflecting roller (283).

16. A system according to Claim 15, wherein the subsystem (285) for deflecting the lower pass (32) of the belt (30) comprises a plurality of deflecting rollers (286) between which the pass (32) of the belt (30) is forced to follow an S-shaped path.

17. A system according to any one of the preceding claims wherein the upper and lower carrying cables (40, 50) extend beyond at least one (20) of the ends of the conveyor system, and that end is suspended on the upper and lower carrying cables (40, 50).

18. A system according to Claim 17 wherein the said end is mounted movably on the carrying cables (40, 50) and has a locating cable for moving it along the carrying cables.

19. A system according to any one of the preceding claims, further comprising a cableway-type conveyor system, for example, for maintenance purposes, comprising a car (300) movable on the upper carrying cables and having a fork-shaped structure arranged astride the conveyor belt (30), wherein the car comprises a central carriage (310) having two series of wheels (311) which can bear on respective upper carrying cables (40), and two cages (340) suspended on the arms (330) of the fork at the sides of the conveyor belt (30).

20. A system according to Claim 19 wherein the central carriage (310) is connected to a hauling cable (353) by means of an orientable drive arm (350).

21. A system according to Claim 20 wherein the drive arm is connected, at its ends, by means of respective articulation joints, to the central carriage (310) at one end and to a clamp (352) for anchorage to the hauling cable (353) at the other end.

22. A system according to any one of Claims 19 to 21 in combination with Claim 11, wherein the retaining deflection guide (270a) for the carrying cables that is provided in the retaining shoe installation (250) has a rail portion (270b) for the wheels (311) of the carriage (310) of the car (300).

23. A system according to Claim 22 in which tapered lead-in portions (270c) are provided at the transition points between the carrying cable (40) and the rail portion (270b), at the ends of the rail portion (270b).

## Patentansprüche

1. Overheadkabel-Fördersystem, das aufweist: ein Förderband (30), das sich in einem geschlossenen Ring bzw. Kreislauf zwischen zwei Enden (10, 20) des Fördersystems erstreckt, um eine obere Förderpassage (31) und eine untere Rückführungspassage (32) des Förderbands zu definieren, und ein Paar oberer Tragkabel bzw. Tragseile (40) und ein Paar unterer Tragkabel bzw. Tragseile (50), die sich wenigstens zwischen den Enden (10, 20) des Fördersystems erstrecken und das Förderband zwischen den Enden (10, 20) des Fördersystems halten können, **dadurch gekennzeichnet, dass**
mehrere starre Rahmenelemente (70) entlang der Förderpassage (31) des Bands verteilt sind, wobei jedes starre Rahmenelement auf entgegengesetzten Seiten in einer stationären Weise auf dem Paar oberer Tragkabel und auf dem Paar unterer Tragkabel aufgehängt ist, wobei eine obere Reihe (80) von Rollen und eine untere Reihe (90) von Rollen auf dem starren Rahmenelement aufgehängt sind und jeweils die obere Förderpassage und die untere Rückführungspassage des Förderbands halten, und **dadurch**, dass
Bandzentrierungseinrichtungen (100, 100', 110, 120, 130) bereitgestellt sind und von der Art sind, die ein oberes Steuerkabel bzw. Steuerseil (120) und ein unteres Steuerkabel bzw. Steuerseil (130) aufweisen, die sich zwischen den Enden (10, 20) des Fördersystems erstrecken und an denen die zentralen Punkte (80c, 90c, 80c') der oberen Reihe (80) von Rollen und der unteren Reihe (90) von Rollen jeweils gelenkig angebracht sind.

2. System nach Anspruch 1, wobei jedes starre Rahmenelement (70) ein paar seitlicher Pfosten (71) und wenigstens zwei Querträger (72, 74) aufweist, die die Pfosten miteinander verbinden, wobei das obere Ende des starren Rahmenelements (70) auf zu dem Paar oberer Tragkabel entgegengesetzten Seiten verankert ist und das untere Ende des starren Rahmenelements (70) auf zu den unteren Tragkabeln entgegengesetzten Seiten verankert ist.

3. System nach Anspruch 2, wobei im jedem starren Rahmenelement (70) der Abstand zwischen den Verankerungspunkten auf den zwei oberen Tragkabeln (40) kürzer als der Abstand zwischen den Verankerungspunkten auf den zwei unteren Tragkabeln (50) ist.

4. System nach Anspruch 2 oder 3, wobei Halterungseinrichtungen (71a) an den oberen Enden der Pfosten (71) angeordnet sind und das Rahmenelement (70) an den oberen Tagkabeln (40) verankern können.

5. System nach einem der Ansprüche 2 bis 4, wobei die wenigstens zwei Querträger einen oberen Querträger (72) und einen unteren Querträger (74) aufweisen, die an den Enden der Pfosten (71) angeordnet sind, und wobei der untere Querträger (74) länger als der obere Querträger (72) ist, um Enden (74a) zu haben, die relativ zu den Pfosten (71) seitlich vorstehen und auf denen Halterungseinrichtungen (74b) angeordnet sind, um das Rahmenelement (70) an den unteren Kabeln (50) zu verankern.

6. System nach einem der vorhergehenden Ansprüche, wobei die obere Reihe (80) von Rollen vom Girlandentyp ist.

7. System nach einem der vorhergehenden Ansprüche, wobei die untere Reihe (90) von Rollen von der Art ist, die ein Paar Rollen in einer V-förmigen Anordnung aufweist.

8. System nach einem der vorhergehenden Ansprüche, das wenigstens eine Lagerschuhinstallation (200) aufweist, die entlang der Ausdehnung der oberen und unteren Tragkabel (40, 50) angeordnet ist und die ein Lager für die Tragkabel (40, 50) definieren kann, wobei die Lagerschuhinstallation derartige Abmessungen hat, dass sie eine leichte Krümmung des Förderbands (30) in einer vertikalen Ebene erlaubt.

9. System nach Anspruch 8, wobei die Lagerschuhinstallation einen Lagerschuh (220) mit einem Krümmungsradius gleich dem etwa 1500-fachen des Durchmessers der Tragkabel aufweist.

10. System nach einem der vorhergehenden Ansprüche, das ferner ein Gegengewichtspannsystem (13) aufweist, um mit Schwankungen der Lastbedingungen eine konstante Spannung des Bands (30) sicherzustellen, wobei das Spannsystem mehrere Rollen (13a) und ein Gegengewicht (14) aufweist, die auf die Rückführungspassage (32) des Förderbands wirken.

11. System nach einem der vorhergehenden Ansprüche, das ferner eine Halteschuhinstallation (250) aufweist, um eine Umlenkstützführung (270a) für die Tragkabel zu definieren.

12. System nach Anspruch 11, wobei die Schuhinstallation ferner ein Bandumlenksystem (280) aufweist, um das Band von einer ersten vorgegebenen Neigung in eine zweite vorgegebene Neigung, die sich von der ersten unterscheidet, umzulenken.

13. System nach Anspruch 12, wobei das Bandumlenksystem ein Teilsystem (281) zum Umlenken der oberen Passage (31) des Bands (30) und ein Teilsystem (285) zum Umlenken der unteren Passage (32) des Bands (30) aufweist.

14. System nach Anspruch 13, wobei das Teilsystem (281) zum Umlenken der oberen Passage (31) des Bands (30) aufweist: mehrere Rollen (282, 283), zwischen denen die obere Passage (31) des Bands (30) gezwungen wird, einem S-förmigen Weg zu folgen, und Einrichtungen (284) zum Abgeben von Material (M) von der oberen Passage (31) des Bands (30) laufaufwärtig von dem S-förmigen Weg und Nachladen des Materials auf die obere Passage (31) des Bands (30) laufabwärtig von dem S-förmigen Weg.

15. System nach Anspruch 14, wobei die mehreren Rollen des Teilsystems (281) zum Umlenken der oberen Passage (31) des Bands (30) eine Antriebsrolle (282) und eine Umlenkrolle (283) aufweisen.

16. System nach Anspruch 15, wobei das Teilsystem (285) zum Umlenken der unteren Passage (32) des Bands (30) mehrere Umlenkrollen (286) aufweist, zwischen denen die Passage (32) des Bands (30) gezwungen wird, einem S-förmigen Weg zu folgen.

17. System nach einem der vorhergehenden Ansprüche, wobei die oberen und unteren Tragkabel (40, 50) sich über wenigstens eines (20) der Enden des Fördersystems hinaus erstrecken und das Ende auf den oberen oder unteren Tragkabeln (40, 50) aufgehängt ist.

18. System nach Anspruch 17, wobei das Ende beweglich auf den Tragkabeln (40, 50) montiert ist und ein Anordnungskabel hat, um es entlang der Tragkabel zu bewegen.

19. System nach einem der vorhergehenden Ansprüche, das ferner ein Seilbahn-Fördersystem aufweist, das zum Beispiel für Wartungszwecke einen Wagen (300) aufweist, der auf den oberen Tragkabeln beweglich ist und eine gabelförmige Struktur hat, die rittlings auf dem Förderband (30) angeordnet ist, wobei der Wagen ein zentrales Fahrwerk (310) mit zwei Reihen von Rädern (311), die auf jeweiligen oberen Tragkabeln (40) aufliegen können, und zwei Körbe (340), die auf den Armen (330) der Gabel auf den Seiten des Förderbands (30) aufgehängt sind, aufweist.

20. System nach Anspruch 19, wobei das zentrale Fahrwerk (310) mit Hilfe eines ausrichtbaren Antriebsarms (350) mit einem Schleppseil (353) verbunden ist.

21. System nach Anspruch 20, wobei der Antriebsarm an seinen Enden mittels jeweiliger Gelenkverbindungen an einem Ende mit dem zentralen Fahrwerk (310) und an dem anderen Ende mit einer Halterung (352) für die Verankerung des Schleppseils (353) verbunden ist.

22. System nach einem der Ansprüche 19 bis 21 in Kombination mit Anspruch 11, wobei die Umlenkstützführung (270a) für die Tragkabel, die in der Halteschuhinstallation (250) bereitgestellt ist, einen Schienenabschnitt (270b) für die Räder (311) des Fahrwerks (310) des Wagens (300) hat.

23. System nach Anspruch 22, in dem konisch zulaufende Einführungsabschnitte (270c) an den Übergangspunkten zwischen dem Tragkabel (40) und dem Schienenabschnitt (270b) an den Enden des Schienenabschnitts (270b) bereitgestellt sind.

## Revendications

1. Système transporteur aérien à câble, comprenant une courroie transporteuse (30) qui s'étend en une boucle fermée entre deux extrémités (10, 20) du système transporteur de manière à définir un passage supérieur de transport (31) et un passage inférieur de retour (32) de la courroie transporteuse, et une paire de câbles porteurs supérieurs (40) et une paire de câbles porteurs inférieurs (50) qui s'étendent au moins entre les extrémités (10, 20) du système transporteur et qui peuvent supporter la courroie transporteuse entre les extrémités (10, 20) du système transporteur, **caractérisé en ce que**
une pluralité d'éléments de châssis rigides (70) sont répartis le long du passage de transport (31) de la courroie, chaque élément de châssis rigide étant suspendu, sur les côtés opposés, de façon rigide, sur la paire de câbles porteurs supérieurs et sur la paire de câbles porteurs inférieurs, une série supérieure (80) de rouleaux et une série inférieure (90) de rouleaux étant suspendues à l'élément de châssis rigide et supportant respectivement le passage supérieur, de transport, et le passage inférieur, de retour, de la courroie transporteuse, et **en ce que**
des moyens de centrage de la courroie (100, 100', 110, 120, 130) sont prévus et sont du type comprenant un câble de commande supérieur (120) et un câble de commande inférieur (130) qui s'étendent entre les extrémités (10, 20) du système transporteur et auxquels sont respectivement articulés les points centraux (80c, 90c, 80c') de la série supérieure (80) de rouleaux et de la série inférieure (90) de rouleaux.

2. Système selon la revendication 1, dans lequel chaque élément de châssis rigide (70) comprend une paire de montants latéraux (71) et au moins deux éléments transversaux (72, 74) qui relient les montants, l'extrémité supérieure de l'élément de châssis rigide (70) étant ancrée sur des côtés opposés à la paire de câbles porteurs supérieurs et l'extrémité inférieure de l'élément de châssis rigide (70) étant ancrée sur des côtés opposés à la paire de câbles porteurs inférieurs.

3. Système selon la revendication 2, dans lequel, dans chaque élément de châssis rigide (70), la distance entre les points d'ancrage sur les deux câbles porteurs supérieurs (40) est plus courte que la distance entre les points d'ancrage sur les deux câbles porteurs inférieurs (50).

4. Système selon la revendication 2 ou la revendication 3, dans lequel des moyens de serrage (71 a) sont disposés aux extrémités supérieures des montants (71) et peuvent ancrer l'élément de châssis (70) aux câbles porteurs supérieurs (40).

5. Système selon l'une quelconque des revendications 2 à 4, dans lequel les au moins deux éléments transversaux comprennent un élément transversal supérieur (72) et un élément transversal inférieur (74) qui sont ménagés aux extrémités des montants (71), et dans lequel l'élément transversal inférieur (74) est plus long que l'élément transversal supérieur (72) de manière à avoir des extrémités (74a) qui débordent latéralement par rapport aux montants (71) et sur lesquels des moyens de serrage (74b) sont disposées pour ancrer l'élément de châssis (70) aux câbles inférieurs (50).

6. Système selon l'une quelconque des revendications précédentes, dans lequel les rouleaux de la série supérieure (80) de rouleaux sont du type en guirlande.

7. Système selon l'une quelconque des revendications précédentes, dans lequel les rouleaux de la série inférieure (90) de rouleaux sont du type comprenant une paire de rouleaux dans une disposition en V.

8. Système selon l'une quelconque des revendications précédentes, comprenant au moins une installation de sabots supports (200) qui est ménagée le long de l'étendue des câbles porteurs supérieurs et inférieurs (40, 50) et qui peuvent définir un support pour les câbles porteurs (40, 50), l'installation de sabots supports ayant des dimensions telles qu'elle permet une légère courbure de la courroie transporteuse (30) dans un plan vertical.

9. Système selon la revendication 8, dans lequel l'installation de sabots supports comprend un sabot support (220) ayant un rayon de courbure égal à environ 1'500 fois le diamètre des câbles porteurs.

10. Système selon l'une quelconque des revendications précédentes, comprenant en outre un système de tension à contrepoids (13) destiné à assurer une tension constante de la courroie (30) en présence de variations des conditions de charge, le système de tension comprenant une pluralité de rouleaux (13a) et un contrepoids (14) qui agissent sur le passage de retour (32) de la courroie transporteuse.

11. Système selon l'une quelconque des revendications précédentes, comprenant en outre une installation de sabots de retenue (250) pour définir un guide de déviation de retenue (270a) pour les câbles porteurs.

12. Système selon la revendication 11, dans lequel l'installation de sabots comprend en outre un système de déviation de courroie (280) pour dévier la courroie d'une première inclinaison prédéterminée à une seconde inclinaison prédéterminée, différente de la première.

13. Système selon la revendication 12, dans laquelle le système de déviation de courroie comprend un sous-système (281) pour dévier le passage supérieur (31) de la courroie (30) et un sous-système (285) pour dévier le passage inférieur (32) de la courroie (30).

14. Système selon la revendication 13, dans lequel le sous-système (281) pour dévier le passage supérieur (31) de la courroie (30) comprend une pluralité de rouleaux (282, 283) entre lesquels le passage supérieur (31) de la courroie (30) est contraint de suivre un trajet en forme de S, et des moyens (284) pour décharger un matériau (M) du passage supérieur (31) de la courroie (30) en amont du trajet en forme de S et recharger le matériau sur le passage supérieur (31) de la courroie (30) en aval du trajet en forme de S.

15. Système selon la revendication 14, dans lequel la pluralité de rouleaux du sous-système (281) pour dévier le passage supérieur (31) de la courroie (30) comprend un rouleau d'entraînement (282) et un rouleau de déviation (283).

16. Système selon la revendication 15, dans lequel le sous-système (285) pour dévier le passage inférieur (32) de la courroie (30) comprend une pluralité de rouleaux de déviation (286) entre lesquels le passage (32) de la courroie (30) est contraint de suivre un trajet en forme de S.

17. Système selon l'une quelconque des revendications précédentes, dans lequel les câbles porteurs supérieurs et inférieurs (40, 50) s'étendent au-delà d'au moins une (20) des extrémités du système transporteur, et en ce que cette extrémité est suspendue aux câbles porteurs supérieurs et inférieurs (40, 50).

18. Système selon la revendication 17, dans lequel ladite extrémité est montée mobile sur les câbles porteurs (40, 50) et comporte un câble de positionnement pour le déplacer le long des câbles porteurs.

19. Système selon l'une quelconque des revendications précédentes, comprenant en outre un système transporteur du type chemin de câbles, par exemple, pour des besoins de maintenance, comprenant un véhicule (300) pouvant se déplacer sur les câbles porteurs supérieurs et ayant une structure en forme de fourche disposée à cheval sur la courroie transporteuse (30), dans lequel le véhicule comprend un chariot central (310) ayant deux séries de roues (311) qui peuvent porter sur des câbles porteurs (40) respectifs, et deux cages (340) suspendues aux bras (330) de la fourche sur les côtés de la courroie transporteuse (30).

20. Système selon la revendication 19, dans lequel le chariot central (310) est relié à un câble de halage (353) au moyen d'un bras d'entraînement orientable (350)

21. Système selon la revendication 20, dans lequel le bras d'entraînement est relié , à ses extrémités, au moyen de joints d'articulation respectifs, au chariot central (310) à une extrémité, et à une pince (352) pour l'ancrage au câble de halage (353) à l'autre extrémité.

22. Système selon l'une quelconque des revendications 19 à 21, en combinaison avec la revendication 11, dans lequel le guide de déviation de retenue (270a) pour les câbles porteurs qui est ménagé dans l'installation de sabots de retenue (250) comporte une partie formant rail (270b) pour les roues (311) du chariot (310) du véhicule (300).

23. Système selon la revendication 22, dans lequel des parties d'entrée à section décroissante (270c) sont ménagées aux points de transition entre le câble porteur (40) et la partie formant rail (270b), aux extrémités de la partie formant rail (270b).
